# EUROPEAN PATENT APPLICATION

(11) **EP 4 276 013 A1**
(43) Date of publication of application: **15.11.2023**
(21) Application number: 22275061.4
(22) Date of filing: 09.05.2022
(51) Int. Cl.: B64C 21/10, B64C 23/06

(54) **CONTROL SURFACE ARRANGEMENT AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is provided a control surface arrangement for influencing fluid flow about a vehicle, the control surface arrangement comprising: a first control surface portion; a second control surface portion, the second control surface provided downstream of the first control surface portion relative to a fluid flow direction, the second control surface portion configured to be moveable relative to the first control surface portion; and a vortex generator surface arrangement arranged to induce vortices in a fluid flow passing over the first control surface portion and/or the second control surface portion.

## Description

### FIELD

The present invention relates to a control surface arrangement, specifically a control surface arrangement for influencing fluid flow about a vehicle. The present invention also relates to a vehicle comprising a control surface arrangement. The present invention also relates to a method of influencing fluid flow.

### BACKGROUND

The direction of an aircraft or watercraft may be controlled by influencing fluid flow about the craft. Control surface arrangements are employed for this purpose. Control surface arrangements are generally foil-shaped appendages. The term "control surface arrangement" includes rudders, fin stabilisers, hydroplanes, and the like.

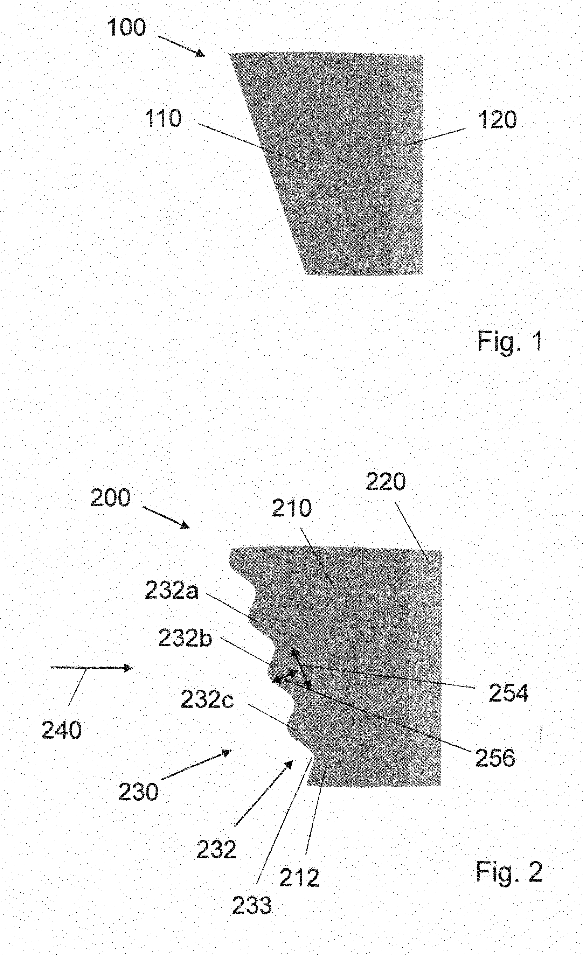

A flapped rudder is a type of control surface arrangement. A conventional flapped rudder 100, according to the prior art, is shown in Figure 1. The flapped rudder 100 comprises a first control surface portion 110 and a second control surface portion 120. The second control surface portion 120 is moveable relative to the first control surface portion 110. The second control surface portion 120 is known as a "flap". As the flapped rudder is turned, the flap introduces camber into the foil section which provides lift.

One problem associated with flapped rudders is the earlier and more severe onset of flow separation. Flow separation is the detachment of a fluid boundary layer from a surface into a wake. Flow separation results in an increase in drag and overall reduction in lift-to-drag ratio.

Active flow control devices have been proposed to address the problem of flow separation. However, such proposed solutions are complex.

It is an object of the present invention to provide an improved control surface arrangement and/or method thereof and/or address one or more of the problems discussed above, or discussed elsewhere, or to at least provide an alternative arrangement and/or method. For example, it is an aim of the present invention to address the problem of flow separation and/or to provide a simplified solution to address the problem of flow separation.

### SUMMARY

According to an aspect of the present invention, there is provided a control surface arrangement for influencing fluid flow about a vehicle, the control surface arrangement comprising: a first control surface portion; a second control surface portion, the second control surface portion provided downstream of the first control surface portion relative to a fluid flow direction, the second control surface portion configured to be moveable relative to the first control surface portion; and a vortex generator surface arrangement arranged to induce vortices in a fluid flow passing over the first control surface portion and/or the second control surface portion.

In one example, at least a part of the vortex generator surface arrangement is provided upstream of the first control surface portion relative to the fluid flow direction.

In one example, a first vortex generator surface of the vortex generator surface arrangement is provided on the first control surface portion.

In one example, the first vortex generator surface is provided on the leading edge of the first control surface portion.

In one example, the first vortex generator surface comprises projections which extend from the leading edge of the first control surface portion.

In one example, a second vortex generator surface of the vortex generator surface arrangement is provided at a side surface of the first control surface portion.

In one example, a third vortex generator surface of the vortex generator surface arrangement is provided in a region between the first control surface portion and the second control surface portion.

In one example, the control surface arrangement is configured to be provided in a vertical, horizontal, or diagonal orientation.

In one example, the control surface arrangement is movable from one of the vertical, horizontal and/or diagonal orientation to another one of the vertical, horizontal and/or diagonal orientation.

In one example, the first control surface portion and/or second control surface portion is selectively configurable to provide the first, second and/or third vortex generator surface.

In one example, one or both of the first control surface portion and second control surface portion are substantially planar.

In one example, the control surface arrangement is a flap rudder or diving plane.

In one example, the fluid flow is liquid flow.

According to a second aspect of the present invention, there is provided a vehicle comprising a control surface arrangement according to the first aspect.

According to a third aspect of the present invention, there is provided a method of influencing fluid flow, the method comprising: providing a control surface arrangement according to the first aspect or a vehicle according to the second aspect; generating vortices in a fluid flow using the vortex generator surface; and receiving the fluid flow across the first control surface portion and/or second control surface portion.

Any aspect of the present invention described above may comprise any or all features of any or all other aspects of the present invention, as desired or as appropriate. This will be clear to the skilled person from their own knowledge, and the clearly closely linked nature of all aspects and embodiments discussed herein.

### BRIEF DESCRIPTION OF THE FIGURES

Embodiments of the invention will now be described by way of example only with reference to the figures, in which:
Figure 1 shows a control surface arrangement according to the prior art;
Figure 2 shows a control surface arrangement;
Figure 3 shows a control surface arrangement;
Figure 4 shows a control surface arrangement;
Figure 5 shows a control surface arrangement at a first flap angle value;
Figure 6 shows a control surface arrangement at a second flap angle value;
Figure 7 shows a control surface arrangement at a third flap angle value;
Figure 8 shows plots of drag coefficient and lift coefficient;
Figure 9 shows flow separation behaviour;
Figure 10 shows a vehicle comprising a control surface arrangement; and
Figure 11 shows general methodology principles.

### DETAILED DESCRIPTION

Control surface arrangements are herein described. The control surface arrangement comprises a vortex generator surface arrangement to induce vortices in a fluid flow. Specifically, the vortex generator surface arrangement induces streamwise (i.e., vortices having an axis of rotation parallel to the fluid flow direction), counter-rotating, vortex pairs. As will be described in greater detail herein, the vortex pairs form behind each projection (or "tubercle") of the vortex generator surface arrangement. The vortices (and vortices in general) exchange momentum in the fluid flow and energise the boundary layer. The vortex pairs act to compartmentalise the flow over the control surface, which maintains attachment of the fluid flow. Advantageously, by maintaining attachment of the fluid flow (possible up to high angle-of-attack (AOA) by the control surface arrangement described herein), improvements in post-stall performance are realised.

The control surface arrangements herein described may be suitable for use in fluids, including in liquids and gases. That is, the fluid flow may be liquid flow (such as water flow) or gas flow (such as air flow). Thus, the control surface arrangements may be adapted for use on aircrafts or watercrafts. The control surface arrangement may be a flap rudder or a diving plane (e.g., for use on watercraft). In this way, the control surface arrangement may be used to control the direction of an aircraft or watercraft, but provide benefits in maintaining flow attachment, and providing for a more gradual onset of stall, despite the introduction of camber.

Referring to Figure 2, a control surface arrangement 200 according to a first embodiment is shown. The control surface arrangement 200 is for influencing fluid flow about a vehicle. The control surface arrangement 200 comprises a first control surface portion 210, a second control surface portion 220, and a vortex generator surface arrangement 230.

The second control surface portion 220 is provided downstream of the first control surface portion 210 relative to a fluid flow direction (indicated generally at 240). The second control surface portion 220 is configured to be moveable relative to the first control surface portion 210.

The vortex generator surface arrangement 230 is arranged to induce vortices in a fluid flow. The vortex generator surface arrangement 230 is arranged to induce vortices in a fluid flow passing over the first control surface portion 210 and/or the second control surface portion 220.

Advantageously, flow separation on the surface of the control surface arrangement 200 is reduced when compared with a control surface arrangement absent a vortex generator surface arrangement 230. Furthermore, the generation of vortices by the vortex generator surface arrangement 230 aid in the reduction in the vorticity magnitude of the wake produced by the interaction of the control surface arrangement 200 with the fluid flow. Overall, this provides for a more efficient vehicle, improved control of the turbulent wake, and a reduction in downstream vorticity. Furthermore, cavitation development is restrained, and underwater radiated noise is reduced.

As introduced above, the vortex generator surface arrangement 230 is arranged to induce vortices in the fluid flow passing over the first control surface portion 210 and/or the second control surface portion 220. The vortex generator surface arrangement 230 comprises a plurality of projections 232a - c, 234a - c, 236a - c. The term "projections" is intended to include protrusions, serrations and/or undulations, and the like. Each projection has a first extent in a lateral direction (which may be described as a length, a wavelength, or portion of a wavelength). Each projection has a second extent in a longitudinal direction (which may be described as a height, or an amplitude). Such projections may be referred to as "tubercles". The vortex generator surface arrangement 230 may be provided (e.g., formed) integrally with the first control surface portion 210 and/or second control surface portion 220. Alternatively, the vortex generator surface arrangement 230 may be formed separately and subsequently attached, connected, or coupled, to the first control surface portion 210 and/or second control surface portion 220.

In absence of a vortex generator surface arrangement, a control surface arrangement (e.g., that of Figure 1) may interact with a fluid flow to induce a first set of fluid properties. In all embodiments described herein (comprising a vortex generator surface arrangement), the provided vortex generator surface arrangement interacts with the fluid flow to induce a second set of fluid properties, the second set of fluid properties comprising an increase in vorticity magnitude of the fluid flow. The vortex generator surface is configured to induce a plurality of periodic, spaced apart, vortices, which correspond to the form of the vortex generator surface arrangement and the spacing of projections.

At least a part of the vortex generator surface arrangement 230 is provided upstream of the first control surface portion 210 relative to the fluid flow direction 240.

In this way, vortices are generated in the fluid flow passing over the first control surface portion 210 and the second control surface portion 220. This is highly advantageous in controlling flow separation. The generated vortices build up in size and strength as they progress downstream. Thus, the vortices have a greater effect on the second control surface portion 220.

A first vortex generator surface 232 of the vortex generator surface arrangement 230 is provided on the first control surface portion 210.

As above, in this way, the vortices generated upstream have a greater effect on the second control surface portion 220, thus improving control of flow separation.

The first vortex generator surface 232 is provided on, or at, the leading edge 212 of the first control surface portion 210. For the avoidance of doubt, the leading edge is relative to the direction of fluid flow 240, or intended use direction. The first vortex generator surface 232 extends from the leading edge 212 of the first control surface portion 210. That is, the projections 232a - c of the first vortex generator surface 232 extend from the leading edge of the first control surface portion 210. This may be contrasted with a construction in which projections are provided "in" a leading edge, or on a surface, which do not extend/project from a leading edge. In other words, the projections 232a - c run along the leading edge of the first control surface portion 210 and extend outwardly from the leading edge 212 thereof. Said extension is in the plane of the first control surface portion 210. Here, the first vortex generator surface 232 (and also the second and third vortex generator surfaces 234, 236 described below) each comprise a series of laterally aligned projections 232a - c, 234a - c, 236a - c. The projections being laterally aligned means that they are aligned side-by-side. The projections are adjacent one another. In some examples, such as that of the first vortex generator surface 232, the projections are aligned to form a continuous surface having a leading edge 233.

The leading edge 233 has a continuous wave-like profile, created by the rise and fall of the plurality of projections 232a - c extending therefrom. The terms "wavelength" and "amplitude" used to describe the dimensions of the projections 232a - c are particularly appropriate here. In Figure 2, the wavelength is indicated at 254, and the amplitude is indicated at 256.

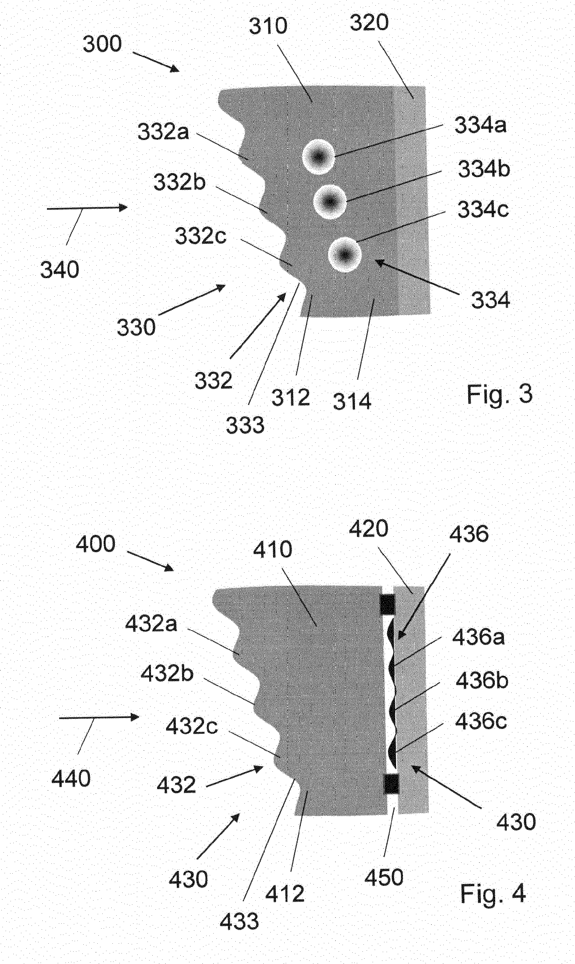

Referring to Figure 3, a control surface arrangement 300 according to a second embodiment is shown. The control surface arrangement 300 of the second embodiment comprises all the features of the control surface arrangement 200 of the first embodiment, apart from the differences described herein. Corresponding features (to those of the first embodiment) are given corresponding reference numerals, but incremented by 100.

As above, the control surface arrangement 300 is for influencing fluid flow about a vehicle. The control surface arrangement 300 comprises a first control surface portion 310, a second control surface portion 320, and a vortex generator surface arrangement 330.

The second control surface portion 320 is provided downstream of the first control surface portion 310 relative to a fluid flow direction (indicated generally at 340). The second control surface portion 320 is configured to be moveable relative to the first control surface portion 310.

The vortex generator surface arrangement 330 is arranged to induce vortices in a fluid flow. The vortex generator surface arrangement 330 is arranged to induce vortices in a fluid flow passing over the first control surface portion 310 and/or the second control surface portion 320.

The vortex generator surface arrangement 330 comprises a second vortex generator surface 334. The second vortex generator surface 334 may be in addition to, or replace, the first vortex generator surface 332. The second vortex generator surface 334 of the vortex generator surface arrangement 330 is provided at a side surface 314 of the first control surface portion 310.

In this way, vortices may be generated and passed over the second control surface portion 320, thus reducing flow separation at the second control surface portion 320. Furthermore, providing the projections 334a - 334c of the second vortex generator surface 334 on the side surface 314 may simplify construction.

Referring to Figure 4, a control surface arrangement 400 according to a third embodiment is shown. The control surface arrangement 400 of the third embodiment comprises all the features of the control surface arrangement 200 of the first embodiment, apart from the differences described herein. Corresponding features (to those of the first embodiment) are given corresponding reference numerals, but incremented by 200.

As above, the control surface arrangement 400 is for influencing fluid flow about a vehicle. The control surface arrangement 400 comprises a first control surface portion 410, a second control surface portion 420, and a vortex generator surface arrangement 430.

The second control surface portion 420 is provided downstream of the first control surface portion 410 relative to a fluid flow direction (indicated generally at 440). The second control surface portion 420 is configured to be moveable relative to the first control surface portion 410.

The vortex generator surface arrangement 430 is arranged to induce vortices in a fluid flow. The vortex generator surface arrangement 430 is arranged to induce vortices in a fluid flow passing over the first control surface portion 410 and/or the second control surface portion 420.

The vortex generator surface arrangement 430 comprises a third vortex generator surface 436. The third vortex generator surface 436 may be in addition to, or replace, the first vortex generator surface 432 and/or second vortex generator surface 434. The third vortex generator surface 436 is provided in a region between the fist control surface portion 410 and second control surface portion 420. Said region may be known as the "flap gap" of a flapped rudder, which is a gap 450 between the first control surface portion 410 and second control surface portion 420. The third vortex generator surface 436 may be provided on the second control surface portion 420 in said region.

In this way, vortices may be generated and passed over the second control surface portion 220, thus reducing flow separation at the second control surface portion 220.

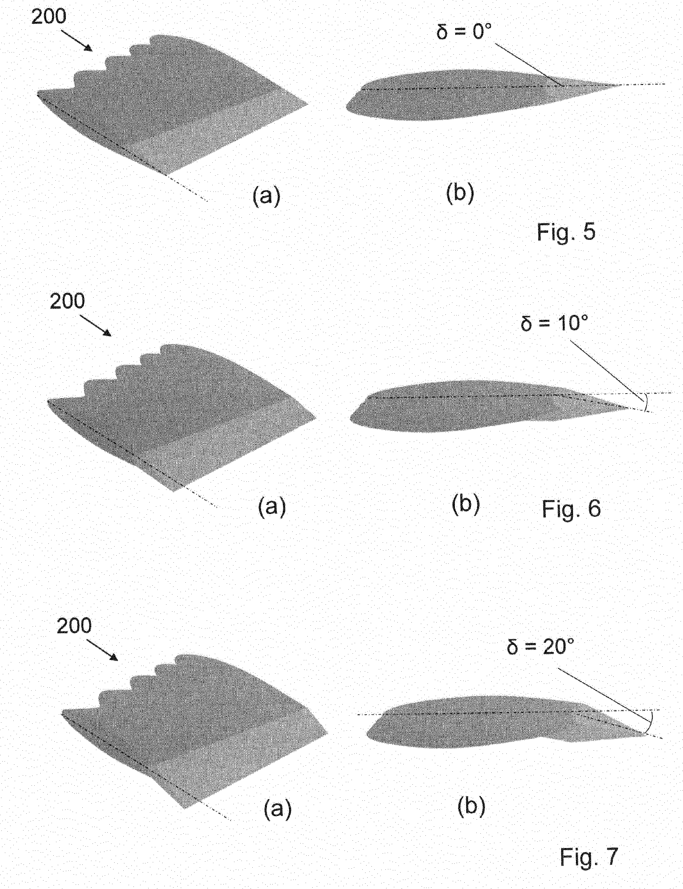

Referring to Figures 5 to 7, the control surface arrangement 200 is shown at various flap angles relative to the rudder chord (i.e., a straight line joining the leading edge and trailing edge of the first control surface portion 210). It will be appreciated that, whilst the control surface arrangement 200 according to the first embodiment is shown, the description applies in a corresponding manner to arrangements 300, 400 of the second and third embodiment.

Referring to Figures 5(a) and 5(b), the control surface arrangement 200 is shown to have a first flap angle, which here is a zero-degree flap angle (δ = 0°).

Referring to Figures 6(a) and 6(b), the control surface arrangement 200 is shown to have a second flap angle, which here is a 10-degree flap angle (δ = 10°).

Referring to Figures 7(a) and 7(b), the control surface arrangement 200 is shown to have a third flap angle, which here is a 20-degree flap angle (δ = 20°).

As above, the second control surface portion 220 is configured to be moveable relative to the first control surface portion 210. The second control surface portion 220 is moveable relative to the first control surface portion 210 between a range of flap angles, which may include between a first flap angle, a second flap angle, and a third flap angle, for example from the zero-degree flap angle to the 20-degree (both positive and negative) flap angle. The second control surface portion 220 being moveable relative to the first control surface portion 210 is the conventional function and operation of a flapped rudder.

The advantages of the herein described vortex generator surface arrangements are quantified with references to the following non-limited examples provided below.

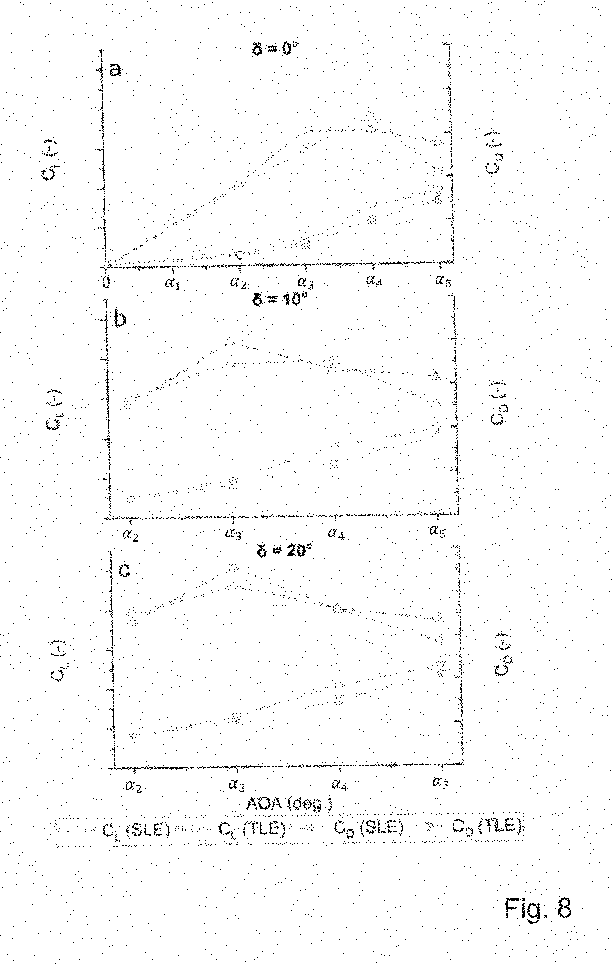

Referring to Figure 8, hydrodynamic coefficients of a prior art control surface arrangement ("straight leading-edge (SLE)" - as shown in Figure 1) and a control surface arrangement according to the present invention ("tubercle leading-edge (TLE)" - comprising a first vortex generator surface 232, as described above) are compared. The hydrodynamic coefficients are plotted against angle-of-attack (AOA, or α), which is the angle between the rudder chord (as above) and the vector representing the relative motion between the first control surface portion 210 and the fluid through which it is moving. The hydrodynamic coefficients illustrated here are provided as an example of an implementation of the invention, illustrating the advantages described above. It will be appreciated that the advantages of the invention are realisable in other examples of control surface arrangements in accordance with the invention.

In the legend of Figure 8, C_{L} (SLE) is the lift coefficient for the straight leading-edge arrangement, C_{L} (TLE) is the lift coefficient for the tubercle leading-edge arrangement, C_{D} (SLE) is the drag coefficient for the straight leading-edge arrangement, and C_{D} (TLE) is the drag coefficient for the tubercle leading-edge arrangement.

As can be seen in Figure 8(a), where the flap angle 5 = 0°, the TLE advantageously maintains lift all the way up to α = α₅°, whilst the SLE is stalled and has a 30% smaller C_{L}. Whilst C_{D} increase for TLE for stall and post-stall α = α₄° and α = α₅°, the increase in lift at the highest AOA advantageously outweighs the drag penalty, increasing lift-to-drag ratio for TLE. Thus, the TLE arrangement is more efficient than the SLE.

As can be seen in Figures 8(b) and 8(c), where the flap angle 5 = 10° and 5 = 20°, the performance for α = α₃° is notable. At this AOA, the TLE increases C_{L} by 14% and 10% over the SLE for 5 = 10° and 5 = 20° respectively. Furthermore, for 5 = 10° and 5 = 20°, C_{L MAX} is advantageously shifted from α = α₄° to α = α₃° for TLE, where it generates more lift and less drag compared to the C_{L MAX} condition of the SLE, thereby increasing effectiveness and efficiency. As the AOA is increased, the lift curve of TLE drops off and flattens out. At α = α₄°, TLE exhibits a small lift penalty for 5 = 10° and matches lift performance for 5 = 20°. At α = α₅° the SLE arrangement has stalled and C_{L} drops. TLE on the other hand largely maintains its C_{L} values post-stall and generates 25% and 18% more lift than SLE for 5 = 10° and 5 = 20° respectively. Generally, the TLE have an increase in peak effectiveness for all flap angle deflections, as well as efficiency improvements.

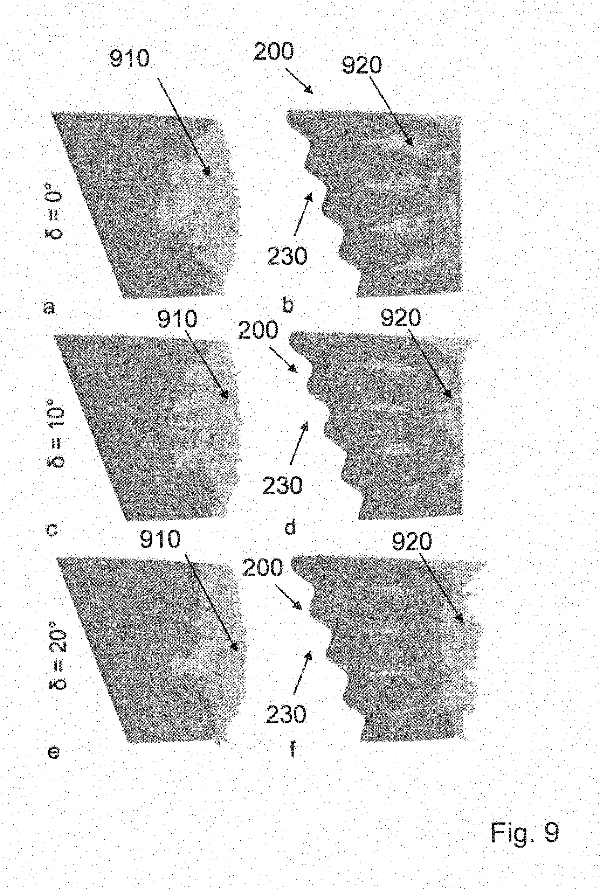

Referring to Figure 9, flow separation behaviour is illustrated. Figures 9(a), 9(c) and 9(e) illustrate flow separation on a SLE arrangement (e.g., as shown in Figure 1). Figures 9(b), 9(d) and 9(f) illustrate flow separation on a TLE arrangement (e.g., as shown in Figure 2). Figures 9(a) and 9(b) illustrate flow separation at flap angle 5 = 0°, Figures 9(c) and 9(d) illustrate flow separation at flap angle 5 = 10°, and Figures 9(e) and 9(f) illustrate flow separation at flap angle δ = 20°.

Flap deflection (e.g., from δ = 0° to δ = 10° to δ = 20°) induces camber and generates larger pressure differences between rudder section and pressure side, thereby increasing lift. However, as can be seen from Figures 9(a), 9(c) and 9(e), the change in curvature around the flap causes flow separation (indicated generally by numeral 910), particularly visible in the region of the second control surface portion.

Advantageously, as can be understood by comparing Figures 9(b), 9(d) and 9(f) (the TLE arrangements) with Figures 9(a), 9(c) and 9(e) (the SLE arrangements), the provision of the vortex generator surface arrangement 230 results in improved flow attachment (i.e., reduced flow separation). The separated flow 920 in Figures 9(b), 9(d) and 9(f) can be seen to be smaller, and more compartmentalised, than the separated flow 910 in Figures 9(a), 9(c) and 9(e). Thus, the control surface arrangement 200 advantageously exhibits improved lift performance, more gradual stall onset, and improved efficiency.

Applicable to all embodiments described herein, the control surface arrangement 200, 300, 400 is configured to be provided in a vertical, horizontal, or diagonal orientation. A vertical orientation may be employed in a watercraft, for example to control direction. A horizontal orientation may be employed in an aircraft or watercraft, for example to control altitude or depth. A diagonal orientation may be employed in a watercraft, for example as a cross-form (or "X form") rudder. The control surface arrangement 200, 300, 400 may be movable, adjustable, or reconfigurable, from one of the vertical, horizontal and/or diagonal orientation to another one of the vertical, horizontal and/or diagonal orientation. That is, for example, the control surface arrangement 200, 300, 400 may be usable as both a rudder and a diving plane. This has advantages in redundancy, in that the control surface arrangement 200, 300, 400 may be provided as a backup control component.

Applicable to all embodiments described herein, one or both of the first control surface portion 210, 310, 410 and second control surface portion 220, 320, 420 may be substantially planar. In other words, the first control surface portion and/or second control surface portion may be foil sections. The first control surface portion and second control surface portion may be aligned in a plane when the flap angle is zero degrees.

Applicable to all embodiments described herein, the first control surface portion 210, 310, 410 and/or second control surface portion 220, 320, 420 may be selectively configurable to provide the first, second and/or third vortex generator surface. That is, the control surface arrangement 200, 300, 400 may be configurable in a configuration wherein the vortex generator surface arrangement 230, 330, 430 is not provided, and thereby does not interact with the fluid flow to induce vortices therein.

The control surface arrangement 200, 300, 400 may be selectively configurable in a configuration wherein the vortex generator surface is provided, and thereby interacts with the fluid flow to induce vortices therein. The control surface arrangement 200, 300, 400 may be selectively configurable in a configuration wherein the vortex generator surface is provided, to a certain extent or degree (e.g. partially) and thereby interacts with the fluid flow to induce vortices therein to a certain extent or degree. Advantageously, this allows the control surface arrangement 200, 300, 400 to be configured to provide the vortex generator surface 230, 330, 430 when it is deemed desirable or necessary to induce vortices in the fluid flow using the vortex generator surface. Advantageously, this also allows the vortex generator surface 230, 330, 430 to be removed, or otherwise not provided to interact in the fluid flow, which can be beneficial to reduce drag or increase the craft wake where appropriate. These benefits have, in particular, not been contemplated or realisable in a liquid (e.g. water) environment. This is surprising, given the benefits that are possible from such an application.

The control surface arrangement 200, 300, 400 may further comprise a controller. The controller is arranged to implement the selective configuration of the vortex generator surface arrangement 230, 330, 430. That is, in this exemplary embodiment, the controller controls actuators to extend or expand, or retract or contract, when it is necessary or desirable to provide the vortex generator surface arrangement 230, 330, 430. For example, the controller can implement the selective configuration of the vortex generator surface 230, 330, 430 following:
a. A user command;
b. Input from an additional sensor arrangement, for example, a sensor arrangement operable to measure and detect turbulent flows, craft velocities and/or fluid flow velocities or the like; and/or
c. Environmental conditions, for example, levels of turbulence, proximity to other craft, time of day, altitude or the like.

In an example, the first control surface portion 210 and/or the second control surface portion 220 comprise a first section comprising a resilient membrane and an actuator assembly. The actuator assembly is operable to adjust the profile of the resilient membrane to provide the vortex generator surface 230. Thus, a series of projections may be provided at the leading edge of, for example, the first control surface portion 210 and/or the second control surface portion 220.

Whilst the example described above comprises an actuator assembly and a resilient membrane, other constructions selectively configurable to provide a vortex generator surface 230, 330, 430 are suitable. For example, in one exemplary embodiment, the first section comprises a shape memory alloy, and the application of heat, for example a heated fluid, causes the shape memory alloy to deform to provide a series of projections. In another exemplary embodiment, the first section may comprise rigid projection members, and a resilient biasing means, or indeed an actuator assembly similar to that described above, can cause the projection members to extend from the first control surface portion 210 and/or second control surface portion 220, and/or retract into the first control surface portion 210 and/or second control surface portion 220.

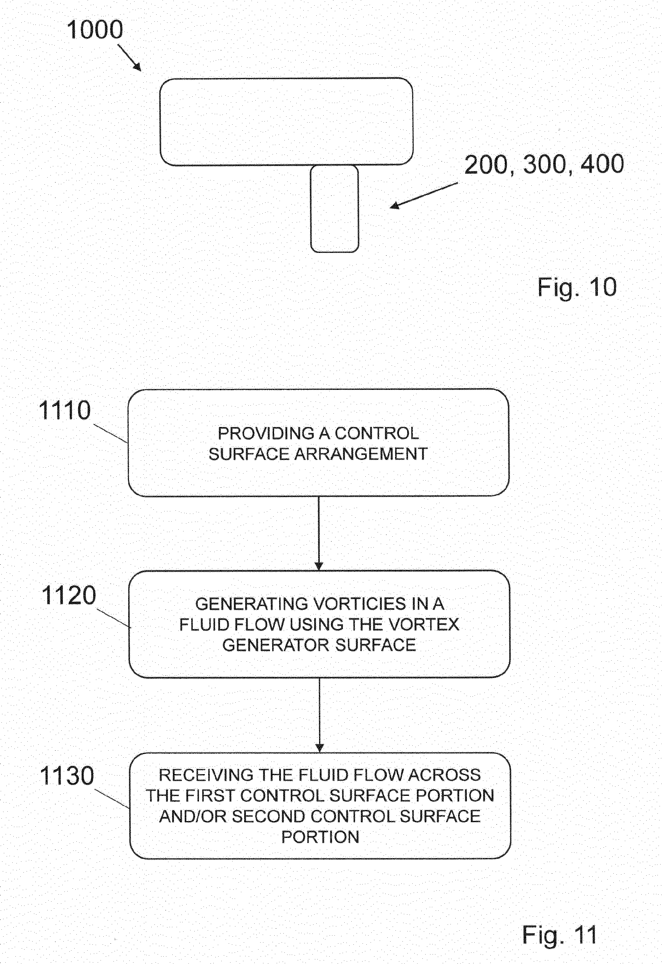

Referring to Figure 10, a vehicle is shown. The vehicle comprises a control surface arrangement 200, 300, 400. The control surface arrangement 200, 300, 400 is as described herein. The control surface arrangement is for influencing fluid flow about a vehicle. The control surface arrangement comprises: a first control surface portion; a second control surface portion, the second control surface provided downstream of the first control surface portion relative to a fluid flow direction, the second control surface portion configured to be moveable relative to the first control surface portion; and a vortex generator surface arrangement arranged to induce vortices in a fluid flow passing over the first control surface portion and/or the second control surface portion.

Referring to Figure 11, a method of influencing fluid flow is shown. Step 1110 comprises providing a control surface arrangement or vehicle. Step 1120 comprises generating vortices in a fluid flow using the vortex generator surface. Step 1130 comprises receiving the fluid flow across the first control surface portion and/or second control surface portion.

In summary, control surface arrangements, vehicles and methods are described. A reduction in flow separation is achieved by the construction of control surface arrangement described herein. Overall, this provides for a more efficient vehicle, improved control of the turbulent wake, and a reduction in downstream vorticity. Furthermore, cavitation development is restrained, and underwater radiated noise is reduced.

It will be appreciated that the aspects and embodiments are closely linked and interrelated, and different features of any one aspect or embodiment could sometimes be used in addition with, on in place of, a feature of another aspect or embodiment.

## Claims

1. A control surface arrangement for influencing fluid flow about a vehicle, the control surface arrangement comprising:
a first control surface portion;
a second control surface portion, the second control surface portion provided downstream of the first control surface portion relative to a fluid flow direction, the second control surface portion configured to be moveable relative to the first control surface portion; and
a vortex generator surface arrangement arranged to induce vortices in a fluid flow passing over the first control surface portion and/or the second control surface portion.

2. The control surface arrangement according to claim 1, wherein at least a part of the vortex generator surface arrangement is provided upstream of the first control surface portion relative to the fluid flow direction.

3. The control surface arrangement according to claim 1 or claim 2, wherein a first vortex generator surface of the vortex generator surface arrangement is provided on the first control surface portion.

4. The control surface arrangement according to claim 3, wherein the first vortex generator surface is provided on the leading edge of the first control surface portion.

5. The control surface arrangement according to claim 4, wherein the first vortex generator surface comprises projections which extend from the leading edge of the first control surface portion.

6. The control surface arrangement according to any one of the preceding claims, wherein a second vortex generator surface of the vortex generator surface arrangement is provided at a side surface of the first control surface portion.

7. The control surface arrangement according to any one of the preceding claims, wherein a third vortex generator surface of the vortex generator surface arrangement is provided in a region between the first control surface portion and the second control surface portion.

8. The control surface arrangement according to any one of the preceding claims, wherein the control surface arrangement is configured to be provided in a vertical, horizontal, or diagonal orientation.

9. The control surface arrangement according to claim 8, wherein the control surface arrangement is movable from one of the vertical, horizontal and/or diagonal orientation to another one of the vertical, horizontal and/or diagonal orientation.

10. The control surface arrangement according to any one of the preceding claims, wherein the first control surface portion and/or second control surface portion is selectively configurable to provide the first, second and/or third vortex generator surface.

11. The control surface arrangement according to any one of the preceding claims, wherein one or both of the first control surface portion and second control surface portion are substantially planar.

12. The control surface arrangement according to any one of the preceding claims, wherein the control surface arrangement is a flap rudder or diving plane.

13. The control surface arrangement according to any one of the preceding claims, wherein the fluid flow is liquid flow.

14. A vehicle comprising a control surface arrangement according to any one of the preceding claims.

15. A method of influencing fluid flow, the method comprising:
providing a control surface arrangement according to any one of claims 1 to 13 or a vehicle according to claim 14;
generating vortices in a fluid flow using the vortex generator surface; and
receiving the fluid flow across the first control surface portion and/or second control surface portion.
